# EUROPÄISCHE PATENTSCHRIFT

(11) **EP 3 239 055 B1**
(45) Veröffentlichungstag und Bekanntmachung des Hinweises auf die Patenterteilung: **30.01.2019**
(21) Anmeldenummer: 16400013.5
(22) Anmeldetag: 25.04.2016
(51) Int. Cl.: B64F 5/40, B25B 23/00, B25B 27/02

(54) **EXTRAHIERVORRICHTUNG ZUM EXTRAHIEREN EINES TRIMMGEWICHTS AUS EINEM ROTORBLATT**
EXTRACTING DEVICE FOR EXTRACTING A TRIM WEIGHT FROM A ROTOR BLADE
DISPOSITIF D'EXTRACTION POUR L'EXTRACTION D'UN POIDS DE LESTAGE HORS D'UNE PALE DE ROTOR

(43) Veröffentlichungstag der Anmeldung: 01.11.2017
(73) Patentinhaber: AIRBUS HELICOPTERS DEUTSCHLAND GmbH, 86609 Donauwörth (DE)
(72) Erfinder: Tannhaeuser, Alois, 86687 Kaisheim (DE)
(74) Vertreter: GPI & Associés

(56) Entgegenhaltungen:
- EP-A1- 2 859 978
- CN-A- 103 522 249
- CN-U- 202 010 995
- US-A- 5 048 805
- US-A1- 2011 088 242

## Beschreibung

Die Erfindung betrifft eine Extrahiervorrichtung zum Extrahieren eines Trimmgewichts aus einem Rotorblatt. Darüber hinaus betrifft die Erfindung ein Verfahren zum Extrahieren eines Trimmgewichts aus einem Rotorblatt mit einer derartigen Extrahiervorrichtung.

Rotorblätter von Drehflüglern, und insbesondere Rotorblätter von Hubschraubern, werden üblicherweise mit Trimmgewichten oder -massen versehen, um das dynamische Verhalten der Rotorblätter im Betrieb zu justieren und ungewünschte und gefährliche Vibrationen zu verhindern. Aufgrund der im Betrieb an den Rotorblättern wirkenden, vergleichsweise großen Zentrifugalkräfte, sowie aufgrund von Korrosion und zugrundeliegenden Herstellungsbedingungen, sind derartige Trimmgewichte gebräuchlicherweise in den Rotorblättern eingeklemmt, bzw. dort in entsprechenden Trimmgewichtkassetten oder -gehäusen angeordnet.

Allerdings sind die Trimmgewichte in den Trimmgewichtkassetten oder -gehäusen, bzw. in zugeordneten Rotorblättern, in der Regel nur relativ schwer zugänglich. Dies ist insbesondere darin begründet, dass üblicherweise jeweils nur eine vergleichsweise kleine Zugriffsöffnung an einer Oberseite der zugeordneten Rotorblätter vorgesehen ist, die einen entsprechenden Zugriff ermöglicht.

Ein bedarfsweises Extrahieren von Trimmgewichten aus Rotorblättern erfolgt im Allgemeinen manuell unter Verwendung gebräuchlicher Handwerkzeuge, da bislang kein dediziertes Werkzeug für eine derartige Extrahierung verfügbar ist, sodass solch ein bedarfsweises Entfernen bzw. Extrahieren in der Regel zeitaufwändig und somit kostenintensiv ist. Aus dem Stand der Technik sind lediglich Vorrichtungen zum Extrahieren von Lagern bzw. Lagerhülsen aus Bohrungen, insbesondere aus Sacklöchern, bekannt. Diese Vorrichtungen sind jedoch nicht zum Extrahieren von Trimmgewichten aus Rotorblättern geeignet, wie nachfolgend beschrieben.

Das Dokument CN 2 180 416 Y beschreibt beispielsweise eine Extrahiervorrichtung zum Extrahieren eines Wälzlagers aus einem Sackloch, wobei die Extrahiervorrichtung aus einer Ziehhülse und einer Schraubspindel besteht. Die Ziehhülse hat einen elastischen, aufspreizbaren Klemmkopf, der mit einer äußeren, symmetrischen Ringschulter versehen ist. Im Inneren dieses Klemmkopfs ist eine symmetrische konische Fläche ausgebildet und im inneren, mittleren Teil ist ein symmetrischer konkaver Kreisbogen vorgesehen. Im Bereich der symmetrischen konischen Fläche ist eine Stahlkugel angeordnet, die von einer Übertragungsstange in Richtung der symmetrischen konischen Fläche beaufschlagbar ist. Am gegenüberliegenden Ende der Übertragungsstange ist eine Schraube mit einem Außengewinde in den Klemmkopf eingeschraubt. Die Schraubspindel ist aus einer Zugstange und einem Ringhammer zusammengesetzt, wobei das vordere Ende der Zugstange mit einem Schraubengewinde versehen ist, während deren hinteres Ende einen Schraubkopf aufweist. Der Ringhammer kann frei auf der Zugstange gleiten, die mit dem Klemmkopf durch eine Verbindungshülse verbunden ist, die auf den Klemmkopf aufgeschraubt ist.

Bei einer Verwendung dieser Extrahiervorrichtung zum Extrahieren eines Wälzlagers aus einem Sackloch wird zunächst der Klemmkopf durch das Wälzlager durchgesteckt. Dann wird die Übertragungsstange durch ein Verdrehen im Klemmkopf axial gegen die Stahlkugel beaufschlagt, die hierbei ein Aufspreizen des Klemmkopfs im Wälzlager bewirkt. Dann wird die Verbindungshülse auf den Klemmkopf aufgeschraubt, woraufhin durch Schläge des Ringhammers gegen den Schraubkopf der Schraubspindel ein Lösen des Wälzlagers im Sackloch und somit ein Extrahieren des Wälzlagers erreicht werden kann.

Das Dokument CN 202 010 995 U beschreibt eine Extrahiervorrichtung zum Extrahieren einer Auskleidung aus einer Öffnung eines Kraftstoffinjektors. Diese Extrahiervorrichtung umfasst ein Schraubelement mit einem Verjüngungsteil, das an einem freien Ende mit einem Konuselement versehen ist, und mit einer Hülse, in die das Verjüngungsteil eingeschraubt werden kann. Das Schraubelement ist in einer Außenhülse angeordnet, die an ihrem freien Ende das Konuselement zumindest abschnittsweise aufnimmt. Dieses freie Ende ist elastisch verformbar und vergrößert oder verkleinert sich in radialer Richtung, wenn das Konuselement darin bewegt wird, sodass bei einer Verwendung der Extrahiervorrichtung das freie Ende der Außenhülse in einer entsprechenden Auskleidung eines Kraftstoffinjektors verklemmbar ist, um die Auskleidung zu extrahieren.

Das Dokument CN 200 984 726 U beschreibt eine ähnliche Extrahiervorrichtung, die allerdings nicht zum Extrahieren einer Auskleidung aus einer Öffnung eines Kraftstoffinjektors, sondern zum Extrahieren eines Wälzlagers aus einem Sackloch vorgesehen ist. Diese Extrahiervorrichtung hat einen ähnlichen Aufbau, jedoch anstelle einer an ihrem freien Ende elastisch verformbaren Außenhülse eine Mehrzahl von aufspreizbaren Spreizarmen, die durch Beaufschlagung mittels eines Konuselements aufspreizbar sind.

Andere Vorrichtungen, bei denen Spreizarme durch Beaufschlagung aufspreizbar sind, sind ebenfalls bekannt. Beispielsweise beschreibt das Dokument WO 2009/147527 A2 eine derartige Vorrichtung.

Allerdings sind alle oben beschriebenen Vorrichtungen vergleichsweise umständlich in der Handhabung, sodass deren Verwendung zeitaufwändig ist. Darüber hinaus können diese Vorrichtungen nicht zum Extrahieren von Trimmgewichten aus Rotorblättern verwendet werden, da aufgrund der starren Ausbildung von den jeweiligen Einzelkomponenten, insbesondere der Übertragungsstange und der Schraubspindel bzw. des Schraubelements und der Außenhülse als solche, jeweils kein Zugreifen über die in den Rotorblättern vorgesehenen Zugriffsöffnungen auf die relativ schwer zugänglichen Trimmgewichte möglich ist.

Das Dokument US 1,593,437 beschreibt eine Extrahiervorrichtung zum Extrahieren eines Gleitlagers, insbesondere einer Lagerhülse, aus einer Öffnung. Diese Extrahiervorrichtung umfasst eine axial verschiebbare Gewindestange, in die eine mit einem Haltekopf versehene Zugschraube einschraubbar ist. Hierzu müssen jedoch die Gewindestange und die Zugschraube zunächst auf gegenüberliegenden axialen Enden der Lagerhülse angeordnet werden, sodass die Extrahiervorrichtung nur bei durchgehenden Öffnungen bzw. Durchgangsöffnungen Anwendung finden kann.

Somit kann diese Extrahiervorrichtung nicht bei Sacklöchern verwendet werden. Darüber hinaus kann diese Extrahiervorrichtung nicht zum Extrahieren von Trimmgewichten aus Rotorblättern verwendet werden, da aufgrund der starren Ausbildung von deren Einzelkomponenten, insbesondere der Gewindestange und der Zugschraube, kein Zugreifen über die in den Rotorblättern vorgesehenen Zugriffsöffnungen auf die relativ schwer zugänglichen Trimmgewichte möglich ist.

Es ist deshalb eine Aufgabe der vorliegenden Erfindung, eine Extrahiervorrichtung zum Extrahieren eines Trimmgewichts aus einem Rotorblatt bereitzustellen, mit der ein Zugreifen über die in Rotorblättern vorgesehenen Zugriffsöffnungen auf die relativ schwer zugänglichen Trimmgewichte auf einfache Art und Weise sicher und zuverlässig möglich ist. Darüber hinaus ist es eine Aufgabe der vorliegenden Erfindung, ein Verfahren zur Verwendung einer derartigen Extrahiervorrichtung bereitzustellen.

Diese Aufgabe wird gelöst durch eine Extrahiervorrichtung zum Extrahieren eines Trimmgewichts aus einem Rotorblatt, die die Merkmale des Patentanspruchs 1 aufweist.

Gemäß der vorliegenden Erfindung weist eine Extrahiervorrichtung zum Extrahieren eines Trimmgewichts aus einem Rotorblatt ein zumindest bereichsweise mit einem Innengewinde versehenes Tragrohr und eine in dem Tragrohr zumindest abschnittsweise angeordnete Gewindestange auf. Die Gewindestange ist mit einem Fixierelement zur lösbaren Fixierung an dem Trimmgewicht verbunden und zumindest bereichsweise mit einem Außengewinde versehen, das zumindest abschnittsweise in das Innengewinde des Tragrohrs eingreift. Die Gewindestange ist zumindest bereichsweise plastisch verformbar und das Tragrohr ist in seiner radialen Richtung flexibel, d.h. plastisch verformbar.

Bevorzugt weist die zumindest bereichsweise plastisch verformbare Gewindestange einen Durchmesser von maximal 3mm auf. Das Tragrohr ist vorzugsweise in seiner Längsrichtung starr, d. h. nicht verformbar, aber in seiner radialen bzw. lateralen Richtung flexibel, d. h. zumindest plastisch verformbar. Die Gewindestange und das Tragrohr sind bevorzugt koaxial zueinander ausgerichtet und relativ zueinander beweglich, insbesondere durch ein Verschrauben der Gewindestange im Tragrohr, d. h. durch ein Einschrauben in oder ein Ausschrauben aus dem Tragrohr. Vorzugsweise kann durch ein derartiges Verschrauben eine axiale Verschiebung des Tragrohrs auf der Gewindestange ermöglicht werden.

Gemäß einem Aspekt ist ein Spreizkeil mittels einer axialen Verschiebung des Tragrohrs durch das Tragrohr relativ zu dem Fixierelement axial verschiebbar. Hierbei kann das Fixierelement z. B. nach Art einer gespaltenen Nadel ausgebildet sein, die zumindest zwei flexible, d. h. vorzugsweise elastisch verformbare, metallische Nadeln aufweist. Diese beiden Nadeln bilden bevorzugt Spreizarme aus, die in einer Öffnung des Trimmgewichts durch axiale Verschiebung des Spreizkeils aufgespreizt werden können, um somit mit dem Trimmgewicht einen Formschluss oder einen Reibschluss auszubilden.

Da die Gewindestange bevorzugt zumindest bereichsweise plastisch verformbar ist, kann diese bei einer entsprechenden Verwendung zum Extrahieren des Trimmgewichts aus dem Rotorblatt vorab derart plastisch verformt werden, dass ein einfaches und unkompliziertes Zugreifen auf das Trimmgewicht im Rotorblatt ermöglicht wird. Insbesondere kann hierdurch eine Ausrichtung der Gewindestange bzw. der Spreizarme relativ zur Öffnung des Trimmgewichts erreicht werden.

Vorteilhafterweise können mit der erfindungsgemäßen Extrahiervorrichtung vergleichsweise große Zuglasten von bis zu 200N beim Extrahieren ermöglicht werden, bei Öffnungen in entsprechenden Trimmgewichten mit einem Durchmesser von bis zu 3,5mm. Des Weiteren kann durch die zumindest bereichsweise plastisch verformbare Gewindestange nicht nur eine Ausrichtung der Spreizarme relativ zur jeweiligen Öffnung eines Trimmgewichts erreicht werden, sondern auch ein Zugriff auf sehr schwer zugängliche Trimmgewichte ermöglicht werden. Somit können auch Trimmgewichte, die mit gebräuchlichen Handwerkzeugen nicht extrahiert werden können, nun auf einfache Art und Weise extrahiert werden. Dies reduziert vorteilhafterweise die Dauer und somit die Kosten entsprechender Wartungsmaßnahmen. Darüber hinaus ist die erfindungsgemäße Extrahiervorrichtung vergleichsweise kostengünstig und sehr einfach handzuhaben, sodass keine aufwändigen Schulungsmaßnahmen bzw. Einweisungen erforderlich sind.

Gemäß einer bevorzugten Ausführungsform weist das Fixierelement mindestens zwei elastisch verformbare Spreizarme zur lösbaren Fixierung an dem Trimmgewicht auf.

Gemäß einer weiteren bevorzugten Ausführungsform sind die mindestens zwei elastisch verformbaren Spreizarme in einer Öffnung des Trimmgewichts aufspreizbar, um eine Ausbildung eines Formschlusses oder eines Reibschlusses der mindestens zwei elastisch verformbaren Spreizarme mit dem Trimmgewicht zu ermöglichen.

Gemäß einer weiteren bevorzugten Ausführungsform ist mindestens ein Spreizkeil zum Aufspreizen der mindestens zwei elastisch verformbaren Spreizarme vorgesehen.

Gemäß einer weiteren bevorzugten Ausführungsform ist der mindestens eine Spreizkeil zwischen den mindestens zwei elastisch verformbaren Spreizarmen translatorisch bewegbar.

Gemäß einer weiteren bevorzugten Ausführungsform ist der mindestens eine Spreizkeil zumindest durch eine axiale Verschiebung des Tragrohrs in eine zugeordnete Tragrohrvortriebsrichtung zwischen den mindestens zwei elastisch verformbaren Spreizarmen in eine zugeordnete Spreizkeilvortriebsrichturig translatorisch bewegbar.

Gemäß einer weiteren bevorzugten Ausführungsform ist das Tragrohr durch eine Verschraubung zumindest eines Abschnitts des Tragrohrs auf der Gewindestange axial auf der Gewindestange verschiebbar.

Gemäß einer weiteren bevorzugten Ausführungsform ist ein Betätigungsglied vorgesehen, das dazu ausgebildet ist, bei einer Betätigung den zumindest einen Abschnitt des Tragrohrs auf der Gewindestange zu verschrauben.

Gemäß einer weiteren bevorzugten Ausführungsform sind die mindestens zwei elastisch verformbaren Spreizarme durch mindestens ein elastisches Vorspannglied relativ zueinander vorgespannt.

Gemäß einer weiteren bevorzugten Ausführungsform ist das mindestens eine elastische Vorspannglied nach Art eines Schrumpfschlauchs ausgebildet.

Gemäß einer weiteren bevorzugten Ausführungsform ist das mindestens eine elastische Vorspannglied dazu ausgebildet, ein Ausrutschen des mindestens einen Spreizkeils aus einem zwischen den mindestens zwei elastisch verformbaren Spreizarmen ausgebildeten Aufnahmebereich zu verhindern.

Gemäß einer weiteren bevorzugten Ausführungsform sind die mindestens zwei elastisch verformbaren Spreizarme dauerhaft an der Gewindestange befestigt.

Gemäß einer weiteren bevorzugten Ausführungsform ist das Tragrohr zumindest bereichsweise plastisch verformbar.

Gemäß einer weiteren bevorzugten Ausführungsform ist auf dem Tragrohr ein Ringhammer axial verschiebbar angeordnet.

Darüber hinaus stellt die vorliegende Erfindung ein Verfahren zum Extrahieren eines Trimmgewichts aus einem Rotorblatt mit einer erfindungsgemäßen Extrahiervorrichtung bereit. Das Verfahren weist zumindest die folgenden Schritte auf: Plastisches Verformen zumindest der Gewindestange, um ein Zugreifen auf das Trimmgewicht in dem Rotorblatt zu ermöglichen; Zugreifen auf das in dem Rotorblatt angeordnete Trimmgewicht über eine in dem Rotorblatt vorgesehene Zugriffsöffnung; Lösbares Fixieren des Fixierelements an dem Trimmgewicht; und Extrahieren des Trimmgewichts aus dem Rotorblatt durch Ziehen an der Extrahiervorrichtung.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen. Es zeigt:
- Figur 1 eine perspektivische Ansicht eines Mehrblatt-Rotors mit einer Mehrzahl von Trimmgewicht-Anordnungen,
- Figur 2 eine Draufsicht auf eine Trimmgewicht-Anordnung und eine erfindungsgemäße Extrahiervorrichtung beim Extrahieren eines Trimmgewichts,
- Figur 3 einen vergrößerten Ausschnitt III von Figur 2,
- Figur 4 eine perspektivische Ansicht eines erfindungsgemäßen Fixierelements der Extrahiervorrichtung von Figur 2 und Figur 3 mit dem Trimmgewicht von Figur 2 und Figur 3,
- Figur 5 eine Schnittansicht des Fixierelements von Figur 4,
- Figur 6 eine teilweise perspektivische Schnittansicht der Extrahiervorrichtung von Figur 2 und Figur 3,
- Figur 7 eine Draufsicht auf einen Abschnitt der Extrahiervorrichtung von Figur 2 mit einem Ringhammer gemäß einer Ausführungsform,
- Figur 8 eine Seitenansicht eines in einer Öffnung des Trimmgewichts von Figur 4 angeordneten Abschnitts des Fixierelements von Figur 4, und
- Figur 9 eine Seitenansicht des zumindest abschnittsweise durch die Öffnung des Trimmgewichts von Figur 4 durchgreifenden Abschnitts des Fixierelements von Figur 8.

In der nachfolgenden Beschreibung beziehen sich die Begriffe links, rechts, vorne, hinten, oben und unten auf die jeweilige Zeichnungsfigur und können in Abhängigkeit von einer jeweils gewählten Ausrichtung (Hochformat oder Querformat) von einer Zeichnungsfigur zur nächsten variieren. Gleiche oder gleich wirkende Teile werden in den verschiedenen Figuren mit denselben Bezugszeichen bezeichnet und gewöhnlich nur einmal beschrieben.

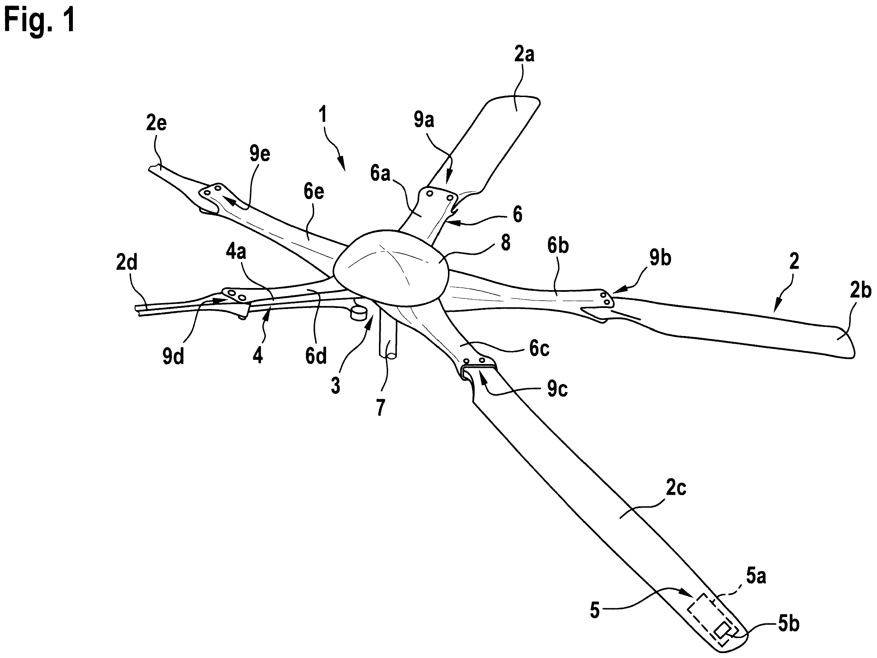

Figur 1 zeigt einen Mehrblatt-Rotor 1 eines Drehflüglers, der gemäß einer Ausführungsform als Hauptrotor eines Hubschraubers Anwendung finden kann. Der Mehrblatt-Rotor 1 weist beispielhaft einen Rotorkopf 3 auf, der an einem Rotormast 7 angeordnet ist und illustrativ von einer Rotorkopfabdeckung 8 abgedeckt ist. Der Rotormast 7 bildet eine Drehachse des Mehrblatt-Rotors 1 aus, um die sich im Betrieb eine Mehrzahl von Rotorblättern 2 dreht.

Der Mehrblatt-Rotor 1 ist beispielhaft als gelenk- und lagerloser Rotor ausgebildet, bei dem die Mehrzahl von Rotorblättern 2, die illustrativ fünf Rotorblätter 2a, 2b, 2c, 2d, 2e aufweist, bevorzugt über eine Mehrzahl von Flexbeam-Elementen 4 mit dem Rotorkopf 3 verbunden ist. Die Mehrzahl von Rotorblättern 2 ist über entsprechende Rotorblattanschlüsse 9a, 9b, 9c, 9d, 9e an der Mehrzahl von Flexbeam-Elementen 4 befestigt.

Der Mehrzahl von Rotorblättern 2 bzw. der Mehrzahl von Flexbeam-Elementen 4 ist vorzugsweise eine Mehrzahl von Steuertüten 6 zugeordnet, über die die Rotorblätter 2a, 2b, 2c, 2d, 2e im Betrieb angesteuert werden, um deren Anstellwinkel bedarfsweise einzustellen. Dementsprechend umfasst die Mehrzahl von Steuertüten 6 fünf Steuertüten 6a, 6b, 6c, 6d, 6e, die jeweils den Rotorblättern 2a, 2b, 2c, 2d, 2e zugeordnet sind.

Die Steuertüten 6a, 6b, 6c, 6d, 6e umhüllen zumindest im Wesentlichen ein jeweils zugeordnetes Flexbeam-Element der Mehrzahl von Flexbeam-Elementen 4, sodass diese in Fig. 1 nicht sichtbar sind. Zwecks Einfachheit und Übersichtlichkeit der Zeichnung ist lediglich die Steuertüte 6d nur teilweise gezeigt, um ein von dieser umhülltes Flexbeam-Element 4a stellvertretend für die Mehrzahl von Flexbeam-Elementen 4 zu illustrieren.

Gemäß einer Ausführungsform weist die Mehrzahl von Rotorblättern 2 eine Mehrzahl von Trimmgewicht-Anordnungen 5 zum Trimmen der Rotorblätter 2a, 2b, 2c, 2d, 2e auf, wobei bevorzugt jedem der Rotorblätter 2a, 2b, 2c, 2d, 2e eine entsprechende Trimmgewicht-Anordnung zugeordnet ist. Allerdings ist zwecks Einfachheit und Übersichtlichkeit der Zeichnung illustrativ lediglich eine Trimmgewicht-Anordnung 5a stellvertretend für die Mehrzahl von Trimmgewicht-Anordnungen 5 separat gekennzeichnet, die im Inneren des Rotorblatts 2c angeordnet ist und über eine am Rotorblatt 2c ausgebildete Zugriffsöffnung 5b zugänglich ist.

Es sei an dieser Stelle darauf hingewiesen, dass der Aufbau und die Funktionsweise des Mehrblatt-Rotors 1 als solche dem Fachmann hinreichend bekannt und nicht Gegenstand der vorliegenden Erfindung sind. Deshalb werden der Aufbau und die Funktionsweise zwecks Knappheit und Klarheit der Beschreibung auch nicht weiter beschrieben. Allerdings sei auch darauf hingewiesen, dass der Mehrblatt-Rotor 1 gezeigt ist, um eine beispielhafte Verwendung und Anordnung der Trimmgewicht-Anordnung 5a, bzw. der Mehrzahl von Trimmgewicht-Anordnungen 5, zu verdeutlichen, um somit ein bevorzugtes Einsatzgebiet der nachfolgend beschriebenen Extrahiervorrichtung zu illustrieren. Diese kann aber ganz allgemein zumindest bei jedem Rotor Anwendung finden, bei dem entsprechende Trimmgewicht-Anordnungen vorgesehen sind, unabhängig von einer jeweiligen Ausgestaltung des Rotors.

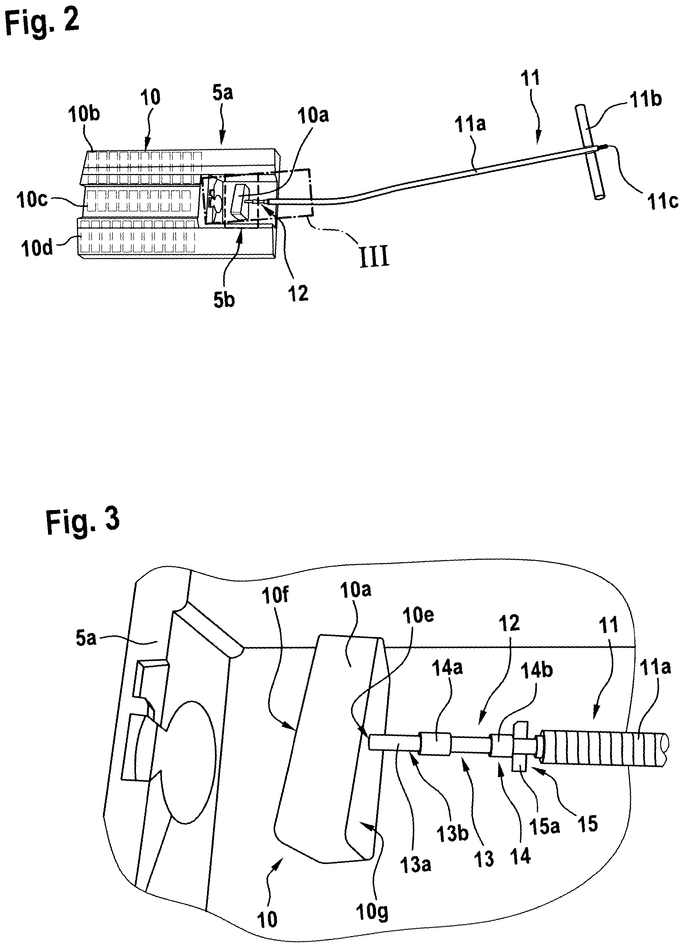

Figur 2 zeigt die Trimmgewicht-Anordnung 5a von Figur 1, die beispielhaft eine Mehrzahl von Trimmgewichten 10 aufweist, von der illustrativ vier Trimmgewichte 10a, 10b, 10c, 10d separat gekennzeichnet sind. Die Mehrzahl von Trimmgewichten 10 kann unmittelbar im Rotorblatt 2c von Figur 1 angeordnet sein, kann alternativ aber auch in einer zugeordneten Trimmgewichtkassette bzw. einem zugeordneten Trimmgewichtgehäuse angeordnet sein, die bzw. das wiederum in dem Rotorblatt 2c von Figur 1 angeordnet ist. Allerdings ist von dem Rotorblatt 2c von Figur 1 zwecks Einfachheit und Übersichtlichkeit der Zeichnung lediglich die Trimmgewicht-Anordnung 5a mit der schematisch angedeuteten Zugriffsöffnung 5b gezeigt.

Darüber hinaus zeigt Figur 2 eine Extrahiervorrichtung 11 gemäß einer Ausführungsform, die bevorzugt zumindest zum Extrahieren von Trimmgewichten aus Rotorblättern ausgebildet ist. Illustrativ ist die Extrahiervorrichtung 11 beim Extrahieren des Trimmgewichts 10a aus dem Rotorblatt 2c von Figur 1 gezeigt.

Bevorzugt weist die Extrahiervorrichtung 11 ein Tragrohr 11a und eine in dem Tragrohr 11a zumindest abschnittsweise angeordnete Gewindestange 11c auf. Die Gewindestange 11c ist vorzugsweise mit einem Fixierelement 12 zur lösbaren Fixierung an dem Trimmgewicht 10a verbunden und ist bevorzugt zumindest bereichsweise plastisch verformbar. Durch diese plastische Verformbarkeit kann vorteilhafterweise ein Zugreifen der Extrahiervorrichtung 11 auf das Trimmgewicht 10a über die vergleichsweise kleine Zugriffsöffnung 5b auf einfache Art und Weise ermöglicht werden.

Das Tragrohr 11a ist bevorzugt in seiner Längsrichtung starr, d. h. nicht verformbar, bzw. zumindest nicht manuell ohne Hilfsmittel verformbar. In seiner radialen bzw. lateralen Richtung ist das Tragrohr 11a jedoch flexibel, d. h. zumindest plastisch verformbar. Somit kann das Tragrohr 11a bei einer Verwendung der Extrahiervorrichtung 11 zwar in eine beliebige Richtung und hierbei bevorzugt innerhalb weiter Grenzen beliebig verbogen werden, jedoch nicht durch Ziehen verlängert werden. Dies gilt bevorzugt analog für die Gewindestange 11c.

Figur 3 zeigt einen Ausschnitt III der Anordnung von Figur 2 zur Verdeutlichung des lösbar am Trimmgewicht 10a fixierten Fixierelements 12 der Extrahiervorrichtung 11. Hierbei greift das Fixierelement 12 bevorzugt zumindest bereichsweise in eine im Trimmgewicht 10a vorgesehene Öffnung 10e ein. Diese kann hierbei sowohl als Sackloch, als auch als Durchgangsöffnung ausgebildet sein.

Illustrativ hat das Trimmgewicht 10a eine in Figur 3 links angeordnete Rückseite 10f und eine gegenüberliegend in Figur 3 rechts angeordnete Vorderseite 10g. Beispielhaft greift das Fixierelement 12 der Extrahiervorrichtung 11 über die Zugriffsöffnung 5b von Figur 1 und Figur 2 von der Vorderseite 10g her in die Öffnung 10e des Trimmgewichts 10a ein.

Bevorzugt weist das Fixierelement 12 eine Mehrzahl von Spreizarmen 13 auf. Die Mehrzahl von Spreizarmen 13 umfasst vorzugsweise mindestens zwei elastisch verformbare Spreizarme 13a, 13b zur lösbaren Fixierung an dem Trimmgewicht 10a. Diese Spreizarme 13a, 13b sind bevorzugt in der Öffnung 10e des Trimmgewichts 10a aufspreizbar, um eine Ausbildung eines Formschlusses oder eines Reibschlusses der Spreizarme 13a, 13b mit dem Trimmgewicht 10a zu ermöglichen.

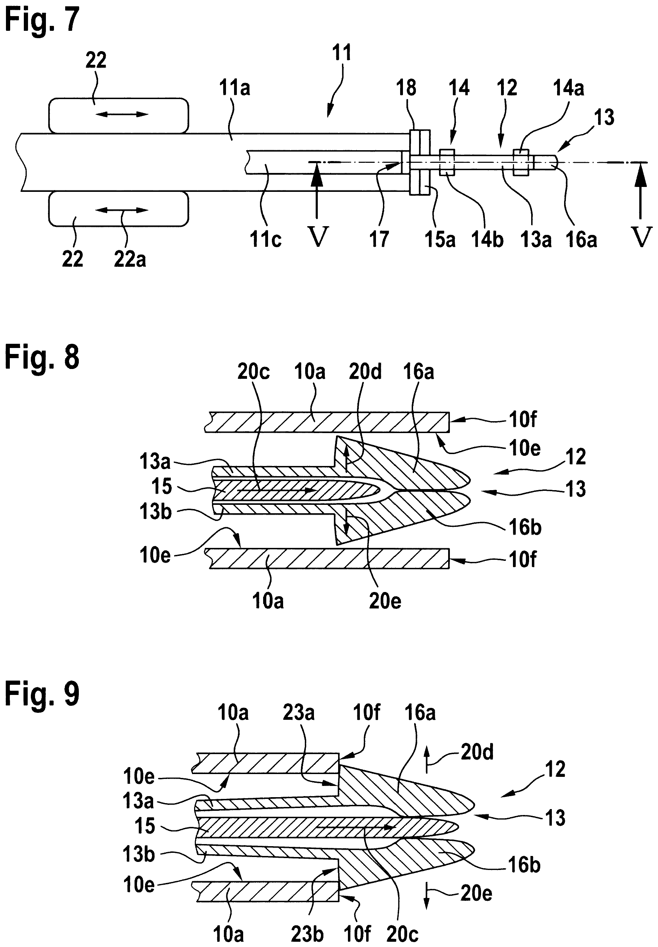

Eine Ausbildung eines entsprechenden Reibschlusses ist unten bei Figur 8 beschrieben. Eine Ausbildung eines entsprechenden Formschlusses ist unten bei Figur 9 beschrieben.

Zum Aufspreizen der Spreizarme 13a, 13b ist vorzugsweise mindestens ein Spreizkeil 15 vorgesehen, der vorzugsweise an einem axialen Ende zumindest bereichsweise konusförmig ausgebildet ist. Dieser ist bevorzugt zwischen den Spreizarmen 13a, 13b translatorisch bewegbar und ist gemäß einem Aspekt zum Vortrieb mit einem Führungsschlitten 15a versehen. Der Führungsschlitten 15a ist vorzugsweise an einem dem konusförmigen Ende gegenüberliegenden axialen Ende des Spreizkeils 15 ausgebildet, sodass der Spreizkeil 15 mit dem Führungsschlitten zumindest annähernd T-förmig ausgebildet ist.

Vorzugsweise sind die Spreizarme 13a, 13b durch mindestens ein elastisches Vorspannglied relativ zueinander vorgespannt. Bevorzugt sind die Spreizarme 13a, 13b durch eine Mehrzahl von elastischen Vorspanngliedern 14 relativ zueinander vorgespannt und illustrativ sind die Spreizarme 13a, 13b durch zwei elastische Vorspannglieder 14a, 14b relativ zueinander vorgespannt. Vorzugsweise ist mindestens eines und illustrativ sind beide elastischen Vorspannglieder 14a, 14b nach Art von Schrumpfschläuchen ausgebildet. Alternativ hierzu können die elastischen Vorspannglieder 14a, 14b von beliebigen elastischen Ringelementen, insbesondere Kunststoffringen, ausgebildet sein.

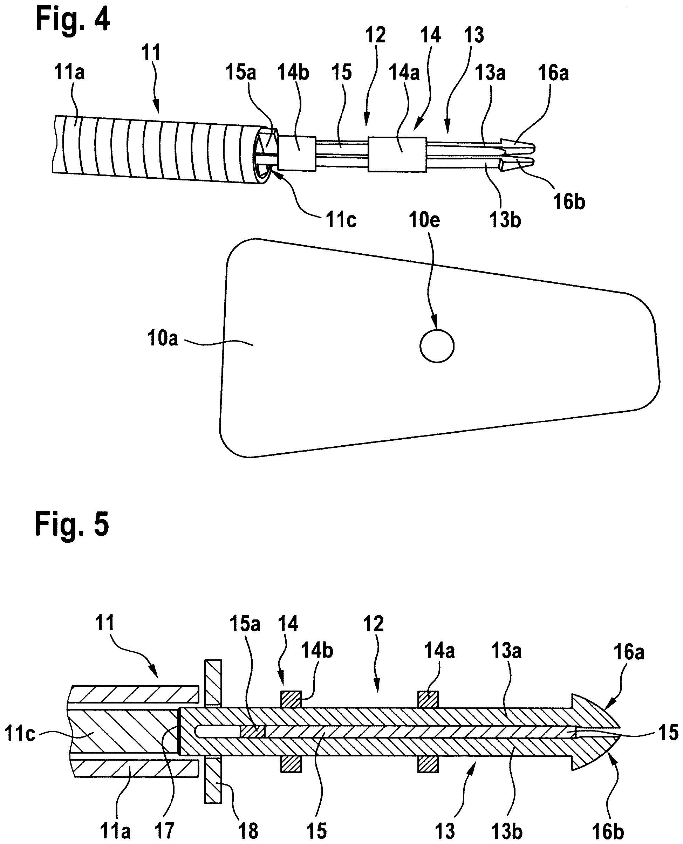

Figur 4 zeigt das Trimmgewicht 10a von Figur 3 zur Verdeutlichung der darin vorgesehenen Öffnung 10e, sowie das Fixierelement 12 mit dem Spreizkeil 15 von Figur 3 zur Verdeutlichung der Anordnung des Spreizkeils 15 in einem zwischen den Spreizarmen 13a, 13b des Fixierelements 12 ausgebildeten Aufnahmebereich. Hierbei sind die elastischen Vorspannglieder 14a, 14b von Figur 3 bevorzugt dazu ausgebildet, ein Ausrutschen des Spreizkeils 15 aus dem zwischen den Spreizarmen 13a, 13b ausgebildeten Aufnahmebereich zu verhindern.

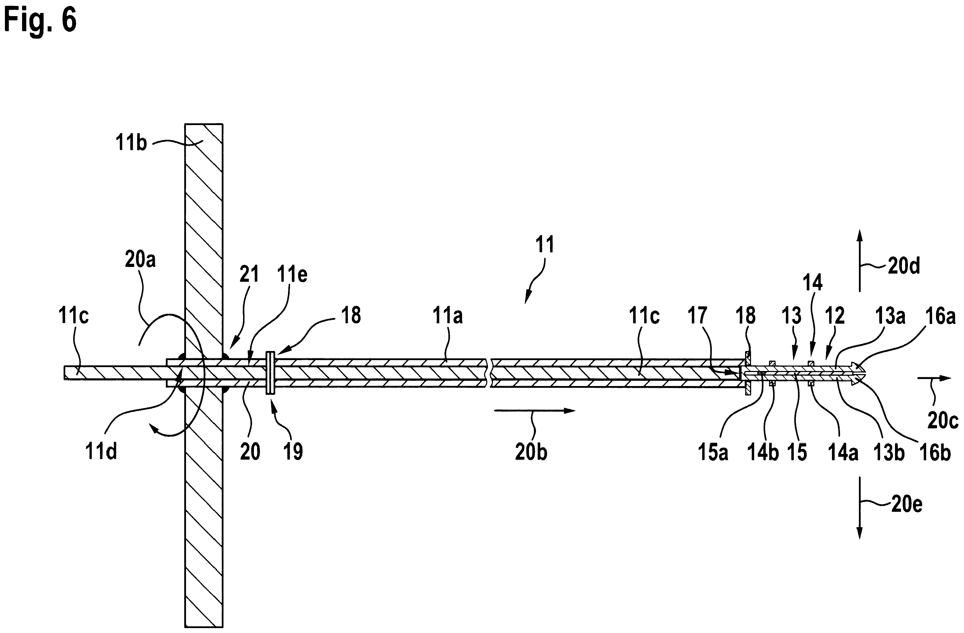

Der Spreizkeil 15 ist beispielhaft in einer Spreizstellung gezeigt, in der dieser die Spreizarme 13a, 13b aufspreizt. In dieser Spreizstellung wird der Führungsschlitten 15a des Spreizkeils 15 vorzugsweise von dem Tragrohr 11a von Figur 2 beaufschlagt. Ein Verfahren des Spreizkeils 15 in diese Spreizstellung durch eine translatorische Bewegung erfolgt vorzugsweise durch eine axiale Verschiebung des Tragrohrs 11a auf der Gewindestange 11c und eine gleichzeitige Beaufschlagung des Führungsschlittens 15a, wie unten bei Figur 6 beschrieben.

Gemäß einem Aspekt sind die Spreizarme 13a, 13b dauerhaft an der Gewindestange 11c befestigt. Eine derartige dauerhafte Befestigung kann z. B. mittels einer Schweißverbindung (17 in Figur 5) erreicht werden, alternativ hierzu aber auch durch eine Schraub- oder Nietverbindung. Darüber hinaus kann eine derartige dauerhafte Befestigung auch durch eine einstückige Verbindung bzw. ein Anformen der Spreizarme 13a, 13b mit bzw. an der Gewindestange 11c hergestellt werden.

Bevorzugt weisen die Spreizarme 13a, 13b an ihren freien Enden zugeordnete Kopfabschnitte 16a, 16b auf. Diese sind vorzugsweise keilförmig ausgebildet und werden nachfolgend auch als die "Spreizarmköpfe" bezeichnet. Illustrativ definiert der Spreizarm 13a einen oberen Spreizarm, der den Spreizarmkopf 16a aufweist, und der Spreizarm 13b einen unteren Spreizarm, der den Spreizarmkopf 16b aufweist. In den jeweiligen Bereichen der Spreizarmköpfe 16a, 16b sind die Spreizarme 13a, 13b bevorzugt rampenförmig ausgebildet, wie beispielhaft in Figur 8 und Figur 9 gezeigt.

Figur 5 zeigt das Fixierelement 12 von Figur 2 bis Figur 4 mit den Spreizarmen 13a, 13b zur Verdeutlichung einer dauerhaften Befestigung dieser Spreizarme 13a, 13b an der Gewindestange 11c. Darüber hinaus zeigt Figur 5 eine am Tragrohr 11a von Figur 2 bis Figur 4 angeordnete Abschlussscheibe 18, die vorzugsweise zur Übertragung einer Vortriebskraft des Tragrohrs 11a auf den Führungsschlitten 15a des Spreizkeils 15 von Figur 3 und Figur 4 zum Verfahren des Spreizkeils 15 in die Spreizstellung, wie bei Figur 4 beschrieben, dient.

Bevorzugt sind die Spreizarme 13a, 13b wie bei Figur 4 beschrieben über eine Schweißverbindung 17 an der Gewindestange 11c befestigt. Gemäß einem Aspekt werden die Spreizarme 13a, 13b von einer gespaltenen Nadel ausgebildet, die zumindest zwei flexible, d. h. vorzugsweise elastisch verformbare, metallische Nadeln aufweist, von denen eine den oberen Spreizarm 13a und die andere den unteren Spreizarm 13b ausbildet. In diesem Fall ist die gespaltene Nadel über die Schweißverbindung 17 mit der Gewindestange 11c verbunden.

Figur 6 zeigt die Extrahiervorrichtung 11 von Figur 2 bis Figur 5 mit dem Tragrohr 11a, dem Betätigungsglied 11b, der Gewindestange 11c und dem Fixierelement 12. Das Tragrohr 11a ist bevorzugt zumindest bereichsweise mit einem Innengewinde 11d versehen und die zumindest abschnittsweise in dem Tragrohr 11a angeordnete Gewindestange 11c ist bevorzugt zumindest bereichsweise mit einem Außengewinde 11e versehen, das zumindest abschnittsweise in das Innengewinde 11d eingreift. Das Innengewinde 11d und das Außengewinde 11e sind bevorzugt korrespondierend zueinander und insbesondere dazu ausgebildet, eine Verschraubung des Tragrohrs 11a auf der Gewindestange 11c bzw. eine Verschraubung der Gewindestange 11c in dem Tragrohr 11a zu ermöglichen.

Gemäß einem Aspekt weist das Tragrohr 11a eine Hülsenmutter 20 auf, die über ein zugeordnetes Verbindungselement 19 mit einem dem Fixierelement 12 zugewandten, in Figur 6 rechten Abschnitt des Tragrohrs 11a verbunden ist. Die Verbindung kann eine lose Verbindung sein, d. h. die Hülsenmutter 20 und der rechte Abschnitt des Tragrohrs 11a können als separate Bauteile ausgebildet sein. Illustrativ besteht das Verbindungselement 19 aus zwei zur Kraftübertragung dienenden Abschlussscheiben 18.

Die Hülsenmutter 20 ist vorzugsweise über eine geeignete Befestigung 21, z. B. eine Schweißverbindung, an dem Betätigungsglied 11b befestigt. Dieses ist bevorzugt dazu ausgebildet, bei einer Betätigung zumindest die Hülsenmutter 20 auf der Gewindestange 11c zu verschrauben, sodass das Innengewinde 11d auch ausschließlich in der Hülsenmutter 20 ausgebildet sein kann. Besonders bevorzugt ist lediglich die Hülsenmutter 20 mit dem Innengewinde 11d versehen.

Gemäß einem Aspekt ist das Tragrohr 11a zumindest durch eine Verschraubung der Hülsenmutter 20 auf der Gewindestange 11c axial bzw. translatorisch auf der Gewindestange 11c verschiebbar. Illustrativ kann durch eine Verdrehung des Betätigungsglieds 11b, z. B. im Uhrzeigersinn, eine Verschraubung der Hülsenmutter 20 in eine beispielhafte Drehrichtung 20a bewirkt werden. Hierdurch wird die Hülsenmutter 20 auf der Gewindestange 11c axial bzw. translatorisch in Richtung eines Pfeils 20b bewegt und schiebt hierbei über das Verbindungselement 19 den rechten Abschnitt des Tragrohrs 11a, der bevorzugt kein Innengewinde aufweist, axial bzw. translatorisch in Richtung des Pfeils 20b, sodass dieser eine Vortriebsrichtung des Tragrohrs 11a anzeigt. Hierbei beaufschlagt das Tragrohr 11a den Führungsschlitten 15a des Spreizkeils 15 über die Abschlussscheibe 18, sodass der Spreizkeil 15 axial bzw. translatorisch in eine Vortriebsrichtung 20c verschoben wird, die der Vortriebsrichtung 20b des Tragrohrs 11a entspricht. Somit ist der Spreizkeil 15 zumindest durch eine axiale bzw. translatorische Verschiebung des Tragrohrs 11a in die Tragrohrvortriebsrichtung 20b zwischen den Spreizarmen 13a, 13b in die Spreizkeilvortriebsrichtung 20c axial bzw. translatorisch bewegbar. Hierdurch werden die Spreizarme 13a, 13b aufgespreizt, wie mit Pfeilen 20d, 20e illustriert.

Figur 7 zeigt einen Abschnitt der Extrahiervorrichtung 11 von Figur 2 bis Figur 6, die gemäß einem Aspekt mit einem Ringhammer 22 versehen ist. Dieser ist bevorzugt auf dem Tragrohr 11a angeordnet und auf diesem axial verschiebbar, wie mit Pfeilen 22a angedeutet. Der Ringhammer 22 kann z. B. dazu verwendet werden, um beim Extrahieren des Trimmgewichts 10a von Figur 2 aus dem Rotorblatt 2c von Figur 1 schlagartige Impulse auf das Verbindungselement 19 bzw. das Betätigungsglied 11b von Figur 6 auszuüben, um ein Lösen des Trimmgewichts 10a zu ermöglichen.

Darüber hinaus verdeutlicht Figur 7 die zwischen dem Tragrohr 11a und dem Führungsschlitten 15a des Spreizkeils 15 von Figur 4 bis Figur 6 angeordnete Abschlussscheibe 18 von Figur 4 bis Figur 6. Diese dient wie oben beschrieben zur Kraftübertragung des Tragrohrs 11a auf den Führungsschlitten 15a.

Figur 8 zeigt das Fixierelement 12 von Figur 2 bis Figur 6 mit den Spreizarmen 13a, 13b und dem Spreizkeil 15, wobei das Fixierelement 12 illustrativ derart in der Öffnung 10e des Trimmgewichts 10a von Figur 4 angeordnet ist, dass die Spreizarmköpfe 16a, 16b der Spreizarme 13a, 13b zumindest im Wesentlichen innerhalb der Öffnung 10e angeordnet sind. Die Öffnung 10e ist hierbei beispielhaft als Durchgangsöffnung zwischen der Vorderseite 10g und der Rückseite 10f des Trimmgewichts 10a ausgebildet.

Gemäß einem Aspekt können die Spreizarmköpfe 16a, 16b in der Öffnung 10e durch die translatorische Bewegung des Spreizkeils 15 in die Spreizkeilvortriebsrichtung 20c von Figur 6 in die zugeordneten Aufspreizrichtungen 20d, 20e von Figur 6 aufgespreizt werden. Hierdurch kann ein Reibschluss zwischen den Spreizarmköpfen 16a, 16b und dem Trimmgewicht 10a hergestellt werden.

Bevorzugt fixiert der Reibschluss das Fixierelement 12 derart an dem Trimmgewicht 10a, dass das Trimmgewicht 10a in eine der Spreizkeilvortriebsrichtung 20c entgegengesetzte Richtung mittels der Extrahiervorrichtung 11 von Figur 2 bis Figur 6 gezogen werden kann. Auf diese Art und Weise kann das Trimmgewicht 10a von dem Rotorblatt 2c von Figur 1 extrahiert werden.

Figur 9 zeigt das Fixierelement 12 von Figur 2 bis Figur 6 mit den Spreizarmen 13a, 13b und dem Spreizkeil 15, wobei das Fixierelement 12 illustrativ derart in der Öffnung 10e des Trimmgewichts 10a von Figur 8 angeordnet ist, dass die Spreizarmköpfe 16a, 16b der Spreizarme 13a, 13b außerhalb der Öffnung 10e an der Rückseite 10f des Trimmgewichts 10a angeordnet sind. Hierbei sind die Spreizarmköpfe 16a, 16b durch die translatorische Bewegung des Spreizkeils 15 in die Spreizkeilvortriebsrichtung 20c von Figur 6 in die zugeordneten Aufspreizrichtungen 20d, 20e von Figur 6 aufgespreizt. Hierdurch kann ein Formschluss zwischen an den Spreizarmköpfen 16a, 16b vorgesehenen Klemmflächen 23a, 23b und dem Trimmgewicht 10a hergestellt werden.

Bevorzugt fixiert der Formschluss das Fixierelement 12 derart an dem Trimmgewicht 10a, dass das Trimmgewicht 10a in eine der Spreizkeilvortriebsrichtung 20c entgegengesetzte Richtung mittels der Extrahiervorrichtung 11 von Figur 2 bis Figur 6 gezogen werden kann. Auf diese Art und Weise kann das Trimmgewicht 10a von dem Rotorblatt 2c von Figur 1 extrahiert werden.

Es sei noch darauf hingewiesen, dass die oben beschriebenen Ausgestaltungen der erfindungsgemäßen Extrahiervorrichtung sowie die Beschreibung von möglichen Verwendungen lediglich beispielhaften Charakter aufweisen und nicht zur Einschränkung der Erfindung dienen. Vielmehr sind vielfache Abwandlungen und Modifikationen möglich und auf dem Fachwissen des Fachmanns begründet. Auch ist die erfindungsgemäße Extrahiervorrichtung nicht auf ein Extrahieren von Trimmgewichten aus Rotorblättern beschränkt, sondern kann bei unterschiedlichsten Fahrzeugen und Maschinen Anwendung finden, bei denen Bauteile nur sehr schwer zugänglich sind und nur sehr schwer oder gar nicht mit gebräuchlichen Handwerkzeugen extrahierbar sind.

### Bezugszeichenliste

- 1: Mehrblatt-Rotor
- 2: Mehrzahl von Rotorblättern
- 2a, 2b, 2c, 2d, 2e: Rotorblätter
- 3: Rotorkopf
- 4: Mehrzahl von Flexbeam-Elementen
- 4a: Flexbeam-Element
- 5: Mehrzahl von Trimmgewicht-Anordnungen
- 5a: Trimmgewicht-Anordnung
- 5b: Zugriffsöffnung
- 6: Mehrzahl von Steuertüten
- 6a, 6b, 6c, 6d, 6e: Steuertüten
- 7: Rotormast
- 8: Rotorkopfabdeckung
- 9a, 9b, 9c, 9d, 9e: Rotorblattanschlüsse
- 10: Mehrzahl von Trimmgewichten
- 10a, 10b, 10c, 10d: Trimmgewichte
- 10e: Trimmgewichtöffnung
- 10f: Trimmgewichtrückseite
- 10g: Trimmgewichtvorderseite
- 11: Extrahiervorrichtung
- 11a: Tragrohr
- 11b: Betätigungsglied
- 11c: Gewindestange
- 11d: Innengewinde
- 11e: Außengewinde
- 12: Spreizelement
- 13: Mehrzahl von Spreizarmen
- 13a: oberer Spreizarm
- 13b: unterer Spreizarm
- 14: Mehrzahl von elastischen Vorspanngliedern
- 14a, 14b: elastische Vorspannglieder
- 15: Spreizkeil
- 15a: Spreizkeilführungsschlitten
- 16a, 16b: Spreizarmköpfe
- 17: Schweißverbindung
- 18: Abschlussscheiben
- 19: Verbindungselement
- 20: Hülsenmutter
- 20a: Hülsenmutterdrehrichtung
- 20b: Tragrohrvortriebsrichtung
- 20c: Spreizkeilvortriebsrichtung
- 20d, 20e: Spreizarmaufspreizrichtungen
- 21: Betätigungsgliedbefestigung
- 22: Ringhammer
- 22a: Ringhammerbewegungsrichtung
- 23a, 23b: Klemmflächen

## Patentansprüche

1. Extrahiervorrichtung (11) zum Extrahieren eines Trimmgewichts (10a) aus einem Rotorblatt (2c), die ein zumindest bereichsweise mit einem Innengewinde (11d) versehenes Tragrohr (11a) und eine in dem Tragrohr (11a) zumindest abschnittsweise angeordnete Gewindestange (11c) aufweist, wobei die Gewindestange (11c) mit einem Fixierelement (12) zur lösbaren Fixierung an dem Trimmgewicht (10a) verbunden ist und zumindest bereichsweise mit einem Außengewinde (11e) versehen ist, das zumindest abschnittsweise in das Innengewinde (11d) des Tragrohrs (11a) eingreift, **dadurch gekennzeichnet, dass** die Gewindestange (11c) ohne Hilfsmittel zumindest bereichsweise plastisch verformbar ist und das Tragrohr (11a) in seiner radialen Richtung plastisch verformbar ist.

2. Extrahiervorrichtung (11) nach Anspruch 1,
**dadurch gekennzeichnet, dass** das Fixierelement (12) mindestens zwei elastisch verformbare Spreizarme (13a, 13b) zur lösbaren Fixierung an dem Trimmgewicht (10a) aufweist.

3. Extrahiervorrichtung (11) nach Anspruch 2,
**dadurch gekennzeichnet, dass** die mindestens zwei elastisch verformbaren Spreizarme (13a, 13b) in einer Öffnung (10e) des Trimmgewichts (10a) aufspreizbar sind, um eine Ausbildung eines Formschlusses oder eines Reibschlusses der mindestens zwei elastisch verformbaren Spreizarme (13a, 13b) mit dem Trimmgewicht (10a) zu ermöglichen.

4. Extrahiervorrichtung (11) nach Anspruch 2,
**dadurch gekennzeichnet, dass** mindestens ein Spreizkeil (15) zum Aufspreizen der mindestens zwei elastisch verformbaren Spreizarme (13a, 13b) vorgesehen ist.

5. Extrahiervorrichtung (11) nach Anspruch 4,
**dadurch gekennzeichnet, dass** der mindestens eine Spreizkeil (15) zwischen den mindestens zwei elastisch verformbaren Spreizarmen (13a, 13b) translatorisch bewegbar ist.

6. Extrahiervorrichtung (11) nach Anspruch 5,
**dadurch gekennzeichnet, dass** der mindestens eine Spreizkeil (15) zumindest durch eine axiale Verschiebung des Tragrohrs (11a) in eine zugeordnete Tragrohrvortriebsrichtung (20b) zwischen den mindestens zwei elastisch verformbaren Spreizarmen (13a, 13b) in eine zugeordnete Spreizkeilvortriebsrichtung (20c) translatorisch bewegbar ist.

7. Extrahiervorrichtung (11) nach Anspruch 6,
**dadurch gekennzeichnet, dass** das Tragrohr (11a) durch eine Verschraubung zumindest eines Abschnitts (20) des Tragrohrs (11a) auf der Gewindestange (11c) axial auf der Gewindestange (11c) verschiebbar ist.

8. Extrahiervorrichtung (11) nach Anspruch 7,
**dadurch gekennzeichnet, dass** ein Betätigungsglied (11b) vorgesehen ist, das dazu ausgebildet ist, bei einer Betätigung den zumindest einen Abschnitt (20) des Tragrohrs (11a) auf der Gewindestange (11c) zu verschrauben.

9. Extrahiervorrichtung (11) nach Anspruch 4,
**dadurch gekennzeichnet, dass** die mindestens zwei elastisch verformbaren Spreizarme (13a, 13b) durch mindestens ein elastisches Vorspannglied (14a, 14b) relativ zueinander vorgespannt sind.

10. Extrahiervorrichtung (11) nach Anspruch 9,
**dadurch gekennzeichnet, dass** das mindestens eine elastische Vorspannglied (14a, 14b) nach Art eines Schrumpfschlauchs ausgebildet ist.

11. Extrahiervorrichtung (11) nach Anspruch 9,
**dadurch gekennzeichnet, dass** das mindestens eine elastische Vorspannglied (14a, 14b) dazu ausgebildet ist, ein Ausrutschen des mindestens einen Spreizkeils (15) aus einem zwischen den mindestens zwei elastisch verformbaren Spreizarmen (13a, 13b) ausgebildeten Aufnahmebereich zu verhindern.

12. Extrahiervorrichtung (11) nach Anspruch 3,
**dadurch gekennzeichnet, dass** die mindestens zwei elastisch verformbaren Spreizarme (13a, 13b) dauerhaft an der Gewindestange (11c) befestigt sind.

13. Extrahiervorrichtung (11) nach Anspruch 1,
**dadurch gekennzeichnet, dass** das Tragrohr (11a) zumindest bereichsweise plastisch verformbar ist.

14. Extrahiervorrichtung (11) nach Anspruch 1,
**dadurch gekennzeichnet, dass** auf dem Tragrohr (11a) ein Ringhammer (22) axial verschiebbar angeordnet ist.

15. Verfahren zum Extrahieren eines Trimmgewichts (10a) aus einem Rotorblatt (2c) mit einer Extrahiervorrichtung (11) gemäß Anspruch 1, umfassend zumindest die folgenden Schritte:
- Plastisches Verformen zumindest der Gewindestange (11c), um ein Zugreifen auf das Trimmgewicht (10a) in dem Rotorblatt (2c) zu ermöglichen,
- Zugreifen auf das in dem Rotorblatt (2c) angeordnete Trimmgewicht (10a) über eine in dem Rotorblatt (2c) vorgesehene Zugriffsöffnung (5b),
- Lösbares Fixieren des Fixierelements (12) an dem Trimmgewicht (10a), und
- Extrahieren des Trimmgewichts (10a) aus dem Rotorblatt (2c) durch Ziehen an der Extrahiervorrichtung (11).

## Claims

1. Extracting device (11) for extracting a trim weight (10a) from a rotor blade (2c), the device comprising a support tube (11a) provided with a female thread (11d) in at least a certain area and a threaded rod (11c) located in at least a section of the support tube (11a), wherein the threaded rod (11c) is joined to a fixing element (12) for releasable fixing to the trim weight (10a) and provided in at least a certain area with a male thread (11e), which engages with the female thread (11d) of the support tube (11a) in at least a section,
**characterised in that** the threaded rod (11c) is plastically deformable without using any aid in at least a certain area and the support tube (11a) is plastically deformable in its radial direction.

2. Extracting device (11) according to claim 1,
**characterised in that** the fixing element (12) has at least two elastically deformable expanding arms (13a, 13b) for releasable fixing to the trim weight (10a).

3. Extracting device (11) according to claim 2,
**characterised in that** the at least two elastically deformable expanding arms (13a, 13b) are expandable in an opening (10e) of the trim weight (10a) to facilitate a formation of a positive or frictional connection between the at least two elastically deformable expanding arms (13a, 13b) and the trim weight (10a).

4. Extracting device (11) according to claim 2,
**characterised in that** at least one expanding wedge (15) is provided to expand the at least two elastically deformable expanding arms (13a, 13b).

5. Extracting device (11) according to claim 4,
**characterised in that** the at least one expanding wedge (15) is capable of translational movement between the at least two elastically deformable expanding arms (13a, 13b).

6. Extracting device (11) according to claim 5,
**characterised in that** the at least one expanding wedge (15) is capable of translational movement between the at least two elastically deformable expanding arms (13a, 13b) in an associated expanding wedge propulsion direction (20c) at least by way of an axial displacement of the support tube (11a) in an associated support tube propulsion direction (20b).

7. Extracting device (11) according to claim 6,
**characterised in that** the support tube (11a) is axially displaceable on the threaded rod (11c) by way of a screw joint of at least a section (20) of the support tube (11a).

8. Extracting device (11) according to claim 7,
**characterised in that** an operating member (11b) is provided which is designed, if operated, to screw the at least a section (20) of the support tube (11a) to the threaded rod (11c).

9. Extracting device (11) according to claim 4,
**characterised in that** the at least two elastically deformable expanding arms (13a, 13b) are preloaded relative to each other by at least one elastic preloading member (14a, 14b).

10. Extracting device (11) according to claim 9,
**characterised in that** the at least one elastic preloading member (14a, 14b) is designed in the manner of a shrink tube.

11. Extracting device (11) according to claim 9,
**characterised in that** the at least one elastic preloading member (14a, 14b) is designed to prevent a slipping of the at least one expanding wedge (15) from a reception region formed between the at least two elastically deformable expanding arms (13a, 13b).

12. Extracting device (11) according to claim 3,
**characterised in that** the at least two elastically deformable expanding arms (13a, 13b) are permanently secured to the threaded rod (11c).

13. Extracting device (11) according to claim 1,
**characterised in that** the support tube (11a) is plastically deformable in at least a certain area.

14. Extracting device (11) according to claim 1,
**characterised in that** a ring hammer (22) is located on the support tube (11a) in an axially displaceable manner.

15. Method for extracting a trim weight (10a) from a rotor blade (2c) using an extracting device (11) according to claim 1, the method comprising at least the following steps:
- the plastic deformation of at least the threaded rod (11c) to facilitate a taking hold of the trim weight (10a) in the rotor blade (2c),
- the taking hold of the trim weight (10a) located in the rotor blade (2c) via an access opening (5b) provided in the rotor blade (2c),
- the releasable fixing of the fixing element (12) on the trim weight (10a), and
- the extraction of the trim weight (10a) from the rotor blade (2c) by pulling the extracting device (11).

## Revendications

1. Dispositif d'extraction (11) pour extraire un lest (10a) d'une pale de rotor (2c), qui présente un tube porteur (11a) pourvu, au moins par endroits, d'un filetage femelle (11d) et d'une tige filetée (11c) disposée, au moins par sections, dans le tube porteur (11a), la tige filetée (11c) étant reliée au lest (10a) au moyen d'un élément de fixation (12) pour une fixation démontable et étant pourvue, au moins par endroits, d'un filetage mâle (11e) qui s'engage, au moins par sections, dans le filetage femelle (11d) du tube porteur (11a), **caractérisé en ce que** la tige filetée (11c) est, au moins par endroits, plastiquement déformable sans outil et que le tube porteur (11a) est plastiquement déformable suivant une direction radiale.

2. Dispositif d'extraction (11) selon la revendication 1, **caractérisé en ce que** l'élément de fixation (12) présente au moins deux bras d'écartement (13a, 13b) élastiquement déformables pour une fixation démontable sur le lest (10a).

3. Dispositif d'extraction (11) selon la revendication 2, **caractérisé en ce que** les au moins deux bras d'écartement (13a, 13b) élastiquement déformables peuvent s'écarter dans un orifice (10e) du lest (10a) pour permettre un serrage mécanique ou par friction des au moins deux bras d'écartement (13a, 13b) élastiquement déformables sur le lest (10a).

4. Dispositif d'extraction (11) selon la revendication 2, **caractérisé en ce que** le au moins un coin d'écartement (15) est prévu pour l'expansion des au moins deux bras d'écartement (13a, 13b) élastiquement déformables.

5. Dispositif d'extraction (11) selon la revendication 4, **caractérisé en ce que** le au moins un coin d'écartement (15), peut effectuer un mouvement de translation entre les au moins deux bras d'écartement (13a, 13b) élastiquement déformables.

6. Dispositif d'extraction (11) selon la revendication 5, **caractérisé en ce que** le au moins un coin d'écartement (15), peut effectuer, au moins grâce à un déplacement axial du tube porteur (11a) dans un sens d'avancée (20b) attribué du tube porteur, un mouvement de translation dans un sens d'avancée (20c) attribué du coin d'écartement, entre les au moins deux bras d'écartement (13a, 13b) élastiquement déformables.

7. Dispositif d'extraction (11) selon la revendication 6, **caractérisé en ce que** le tube porteur (11a) peut être déplacé de manière axiale sur la tige filetée (11c) grâce au vissage d'au moins une section (20) du tube porteur (11a) sur la tige filetée (11c).

8. Dispositif d'extraction (11) selon la revendication 7, **caractérisé en ce qu'**un actionneur (11b) est prévu pour visser au moins une section (20) du tube porteur (11a) sur la tige filetée (11c) en cas d'actionnement.

9. Dispositif d'extraction (11) selon la revendication 4, **caractérisé en ce que** les au moins deux bras d'écartement (13a, 13b) élastiquement déformables, sont précontraints l'un par rapport à l'autre par au moins un élément de précontrainte (14a, 14b) élastique.

10. Dispositif d'extraction (11) selon la revendication 9, **caractérisé en ce que** le au moins un élément de précontrainte (14a, 14b) élastique est conçu sous la forme d'une gaine thermorétractable.

11. Dispositif d'extraction (11) selon la revendication 9, **caractérisé en ce qu'**au moins un élément de précontrainte (14a, 14b) élastique est conçu pour empêcher un glissement du au moins un coin d'écartement (15), hors d'une surface de réception formée entre au moins deux bras d'écartement (13a, 13b) élastiquement déformables.

12. Dispositif d'extraction (11) selon la revendication 3, **caractérisé en ce que** au moins deux bras d'écartement (13a, 13b) élastiquement déformables sont fixés durablement à la tige filetée (11c).

13. Dispositif d'extraction (11) selon la revendication 1, **caractérisé en ce que** le tube porteur (11a) est plastiquement déformable au moins par endroits.

14. Dispositif d'extraction (11) selon la revendication 1, **caractérisé en ce qu'**un marteau à anneau (22) à déplacement axial est positionné sur le tube porteur (11a).

15. Procédé d'extraction du lest (10a) hors d'une pale de rotor (2c) à l'aide d'un dispositif d'extraction (11) selon la revendication 1, comprenant au moins les étapes suivantes :
- déformation plastique d'au moins la tige filetée (11c), pour permettre de saisir le lest (10a) dans la pale de rotor (2c),
- saisie du lest (10a) positionné dans la pale de rotor (2c) via un orifice d'accès (5b) prévu dans la pale de rotor (2c),
- fixation désolidarisable de l'élément de fixation (12) sur le lest (10a), et
- extraction du lest (10a) hors de la pale de rotor (2c) en tirant sur le dispositif d'extraction (11).
